# EUROPEAN PATENT SPECIFICATION

(11) **EP 2 576 339 B1**
(45) Date of publication and mention of the grant of the patent: **11.02.2015**
(21) Application number: 11749899.8
(22) Date of filing: 03.06.2011
(51) Int. Cl.: B64B 1/00, B64B 1/16, B64B 1/60

(54) **SUPER-RIGID HYBRID AIRSHIP AND METHOD OF PRODUCING IT**
HOCHFESTES HYBRID-LUFTSCHIFF UND VERFAHREN ZU SEINER HERSTELLUNG
AÉROSTAT HYBRIDE SUPER-RIGIDE ET PROCÉDÉ DE SA PRODUCTION

(30) Priority: 07.06.2010 BR PI1001654
(43) Date of publication of application: 10.04.2013
(73) Proprietor: Kraus, Hans Georg, 04662002 Sao Paulo (BR)
(72) Inventor: Kraus, Hans Georg, 04662002 Sao Paulo (BR)
(74) Representative: Marek, Joanna
(86) International application number: PCT/IB2011/001216
(87) International publication number: WO 2011/154797

(56) References cited:
- US-A- 1 641 324
- US-A- 2 197 568
- US-A- 3 456 903

## Description

The invention relates to a hybrid airship of a dirigible type, structural characteristic and a method of construction thereof. The invention is applicable in the aeronautical market, environmental enterprises, construction work, transport, hoisting and various other applications.

### Background of the Invention

Currently the following categories of aerostats are known:

### Rigid aerostats

In aircrafts of this type a truss frame structure is used, build with caves and stringers that define the format of the aircraft that is then coated with light materials as impregnated fabric, rubber and materials that give the final form of the aircraft. The aircraft of this type does not have any internal pressurization as the gas is stored in some balloons disposed internally within structure and all the mechanic load of the engines, cabins, rudders and other aircraft components is fixed to this structure. Rigid aerostats are so far the safest, the fastest and have bigger useful load capability than the other aerostats types. Exemplary rigid aerostats were Graf Zeppelin and Hindenburg.

### Semi-rigid aerostats

These aircrafts use an internal overpressure to keep the shape of the aircraft but utilize structural elements in key points supporting cabin, engines, rudders and other heavier items. They are usually covered with flexible and resistant materials (such as Hypalon -DuPont registered mark), like those used in rubber boats.

### Non-rigid aerostats

These aircrafts are covered with the flexible material, pressurized generally with Helium and its cabin is hanging. They also are known as Blimps (an example is the promotional Goodyear airship).

### Metal-Clad

These airships share some characteristics of the rigid and the non-rigid ones, using a very thin and hermetic metal balloon instead of a Hypalon or rubber one as conventional. There are only two examples of this kind of airships, the aluminium balloon of Schwarz from 1897 and the ZMC-2.

The lighter than the air airships, known as dirigible airships, had at the first decades of the past century i.e. at the time when they were dominating the air, some lacks, due to limited resources and technology. Although nowadays the resources and technology are available, the development of dirigibles is still limited as it has been in the past, which in turn limits their production and utilization. Difficulties like security, dimensional stability in bad weather conditions (i.e. turbulences and hurricanes), resistance to thunderbolts, fireproofness (ability not to take fire), controllability in such adverse conditions, buoyancy in heavy rain conditions, instability when flying at higher velocities (more than 150 km/ h) arise beside of other construction limitations with regard to the size of such aircrafts. These limitations, in connection with increased security considerations, production costs, etc., as well as the memory of the accident of the Hindenburg - the biggest dirigible that operated in the third decade of the last century, has always been stopping the development of such aircrafts.

Patent publication US 2,197,568 discloses a rigid airship according to the preamble of claim 1. It has a hull structure, a gastight metal skin surrounding and conforming to the outer contour of said hull structure to which it is secured, and expansion means for creating tension in the metal skin so that it resists shear and bending forces at atmospheric gas pressure.

Patent publication US 3,456,903 discloses a motor driven, maneuverable, non-rigid dirigible filled with lifting gas comprising an essential portion of steam and having intermediate tensile connectors interconnecting dirigible inner and outer walls radially, which are collapsible and spaced a short distance in relation to one another; and surface sectors are formed of thin strips of collapsible foil which reflect the heat and which are spaced close to one another for a zigzag configuration between said inner and outer walls and are secured to said inner and outer walls.

The state of art developments in dirigible airships relates to semi-rigid ones and the employment of hi-tech materials such as carbon fiber and hardened aluminium as structural elements and special plastic and rubber sheets featuring high strength such as Hypalon, for providing better dimensional and operational stability.

Nonetheless modern semi-rigid dirigibles still have the same deficiencies as the old dirigibles:
- Operational and structural instability during bad weather, storms, atmospheric gusts and other weather adverse conditions;
- Sensitivity to rapid variations of temperature and atmospheric pressure;
- Sensitivity and difficulty to retain buoyancy in torrential rain conditions;
- Difficulties and limitations of security landings and take-off techniques;
- Limitations of speed to about 150 km/h;
- Limitations concerning techniques and costs of constructing aircrafts having larger dimensions;
- Problems with hydrogen and/or helium permeability of materials covering the aircraft leading to losses of gas;
- Difficulties and limitations concerning secure use of hydrogen, which is perfect gas for aerostats because of its low density and production cost, but its use is restricted due to the high risk of fire and explosion;
- Unreliability and risk caused by radiation and electric discharges;
- Difficulties and limitations concerning the ballast used for keeping aircraft density controlled in order to maintain stable flying conditions in varied air density and different altitudes, wherein the ballast weight reduces due to fuel consumption;
- Economic limitations resulting from the necessary construction of large hangars required to construct large airships;
- Limited speed and increased fuel consumption due to inertia of the massive air layer adhered to the body of great airships;
- Limitations and difficulties to maintain the position of the airship when stopped and during landing operations.

The present invention had the object of reducing the above mentioned limitations.

### Summary of the invention

The invention provides a new category of hybrid airships, an entirely auto-sustainable rigid airship, as defined in Claims 1 to 11.

The airship is preferably an egg- or cigar-shaped and coated externally with thin metallic plates with intercalated composite material of resins and strong fibers like Kevlar, carbon and glass fibers with some internal inserts internally pressurized with pressures between 0.01 to 0.14 kg/cm² (between 100 to 1400 mmCA), thus including all the advantages and potential offered by the concept of structures getting rigid by the use of internal light gases pressure.

Such a material that is rigid, incombustible and impermeable to gases prevents from leakage, while internal atmosphere free from oxygen prevents ignition of fire. As such a structure is completely conductive by use of thin metal blades outside of the airship's body it does not create conditions for generation or storage of static energy. It is also resistant to thunderbolts, thunderstorm and the UV rays.

A super-rigid internal structure is based on a spine-like pressurized tubular structure with approximate diameter between 5 to 10% of the maximum diameter of the aircraft, disposed preferably along the central line, from the nose to the tail. The tube is preferably pressurized with hydrogen having internal pressures of between 0.5 to 2.0kg/cm², which keeps it straight and rigid. Furthermore hydrogen action applied to the domes (cupules) on the nose and the tail at the rear may extend the airship and distributes mechanical forces of reaction of the ducted fan or turbine(s) equally through the whole body and the nose

The external cover, produced preferably from rigid composite material that begins with the dome and finishes by the tail is strongly secured to the pressurized toroidal (tire-like) forms (Brazilian application No. PI0706251-6) settled in approximate space of 50% the 100% of the maximum diameter in case of a cigar-shaped airship, having centres connected concentrically to the central tube preferably with series of straight pulled cables, of a configuration similar to the wheels of bicycles.

Such an internal structure is able to keep the airship shape even if it lost its internal pressure during the flight. These structures, added to the other shell made of very strong and rigid composite material are also very strong due to its internal overpressure strengthening the shape of the aircraft that determines the new category of the super rigid airships.

Maintenance of an internal chamber pressure, such as about 350mmCA, in the external covering rigid material and airship internal components also pressurized and stretched, defines an extremely strong structure capable of resisting winds of up to 280 km/h without suffering deformations that might compromise the navigability, controllability and the security of the aircraft, and also allows the safe use of the hydrogen, the best (due to having the lowest density) the and the cheapest available gas for filling the airships.

To ensure the rigidity and mechanic resistance, the internal volume of the structure must be pressurized to a higher extent as compared to the external pressure, providing for a bidirectional extension in the structural layer that will be kept stretched and inflated, being therefore able to support demands of external pressure, gust of winds, shocks of birds, objects and diverse mechanical demands, including high velocity conditions (up to 280 km/h) without suffering deformations. The pressure exerted from inside of the airship tends to keep it totally rigid, like a pumped ball or a tire.

In the central pipe that is the spine of the airship a fixed pressure is obtained with the introduction of a volume of light gases that can be twice or three times more than the inside volume of the tube itself, creating internal pressures of 1 to 3 atmospheres (14 to 42 pounds/in²), keeping it totally rigid because of the axial and radial forces that the outer shell is submitted and this pressed gas inside this tubular spine consists together with the tube as an unique structure.

The internal pressure of the aircraft, which divides the internal volume of the pressurized structure from the extern environment or atmospheric air in which it is supported, can still vary in accordance with the altitude or operational flight ceiling (altitude) of the aircraft, its speed or, in accordance to the meteorological conditions, Since this over-pressure determines the mechanical and structural resistance of the aircraft a rigorous control of the pressure is obtained with the introduction of differential pressostates, which measure the differences between internal and external pressures and compare them with the established minimum and maximum values for a determined altitude and atmospheric condition, providing an automatic correction of these values by introducing or removing of the atmospheric air in the ballast bags or cuffs (7) or by varying the internal temperature of the hydrogen balloons (6), keeping the internal pressure of the aircraft always controlled, and adjusting it to the most favourable condition with regard to its speed, operational flight ceiling thus keeping unchanged and stable the pressure difference between the inside and outside of the aircraft.

Despite the internal pressurization that keeps the aircraft super-rigid, holding its shape even under severe demands, even in situations where failures due to adverse situations as mechanical/electrical problems, shocks of the aircraft or other situations, the structural elements despite of its own internal pressurization, will keep the airship stable and within the original shape, losing only the additional rigidity needed for higher speeds, forcing its reduction but keeping security and the possibility to continue the flight.

The laminates with special technical fibres, with high traction strength, such as carbon fibres, aramid (Kevlar ^{®} as well as glass fibres, have unique characteristics with regard to the traction strength, which can exceed by up to forty times the metallic components, however, when impregnated with plastic resins, they become flammable, slightly resistant to ultraviolet rays, permeable to gases with small molecular size, can be cut and scratched very easily.

The production of "sandwiches" in which extremely thin and light metal sheets, cover such fibres that are impregnated with epoxy adhesive as an example, protect them against the degrading action of ultraviolet rays, cutting with sharps objects, keep them free from oxygen, thus making the laminate built extremely light, waterproof and sturdy, and protected from combustion. It can be achieved with single or multiple blades, including the alternative to use this with thin metal sheets covered and protected layers of fibres, on both sides of a core, done with lightweight materials and a good resistance to compression, like balsa wood or phenol impregnated paper (honey comb) structures, that can increase its strength and tightness with a minimum additional weight

Aircraft or large-scale structures, that move in a fluid medium, in this case the atmospheric air, keep air molecules adhered or stuck to aircraft the surface forming one layer. This physical characteristic has been studied and defined by Reynolds who defined a number that applied to fluid mechanics, can determine the thickness of boundary layers. This characteristic of the gas was detected and observed in practice by maintenance mechanics and crew of the old rigid airships, like the "Graf Zeppelin" and "Hindenburg", where, even with the aircraft moving at 140 km/h, the build adhered air layers having an average thickness of about 1.20 to 1.70 m, allowed mechanics and crew to walk on the outer airship jacket without having to worry about winds or large air velocities, which could put their walks at risk. This layer, according to calculations of the time, was representing almost the weight of own airship itself, increasing its inertia, and therefore decreasing its performance and reducing their manoeuvrability.

The invention provides a special device attached to the "trailing edge" or tail of the airship, which has been termed as an inducer (10), which in conjunction with the structural layer (4) completely smooth and covered with special (commercially available) antifriction crystallizing agents, significantly reduces the friction coefficient and thus the process of building of this air layer.

These constructive and functional characteristics of the airship according to the invention solve most of the deficiencies indicated above but also have another great advantage, characterized by allowing vertical construction of the airship executed in centralized modules, with concentric rings as segments, starting with the front dome until the maximum diameter, whose lift becomes easy by using Helium in its own internal components to lift them. The second half is also built on the summit trail (bottom) to the maximum diameter, whose lifts are also facilitated with the help of light gases already in its internal components. The two halves are then assembled in the air, simplifying and making the production costs extremely competitive and allowing the construction of giant aircraft, with no size limitation.

Some examples of benefits of using of the aircraft in super-rigid and continuous self-sustaining version among many, is the viability of collecting tons of crops from areas difficult to access and loading them directly into ships without the costs of other kinds of transport and logistics that prevents economic production and marketing. Therefore the invention guaranties a super heavy cargo transport without the pain of complicated logistic operations, risky and high costs allowing the loading of whole pieces of transported goods without the need for disassembly or fragmentation, by downloading them directly at their final destination. It also permits an easier and more rational and ecological exploitation of natural resources as trees, minerals etc.

For passenger transport the invention offers the possibility of different configurations of compositions with large areas, a lot of place, providing comfort for a large number of passengers on their journeys, allowing the loading, unloading or exchange of compositions according to the needs, without requiring movement of people for transhipments or connections with other aircraft or other kinds of transportation.

### Brief Description of the Drawings

The present invention creates a new conceptual framework for hybrid dirigibles which shall be presented below in details in exemplary embodiments and in connection with the attached drawings on which:
Fig. 1 shows a perspective view of the internal structure of the airship;
Fig. 2 shows a perspective view of the internal structure of the airship with the cuff inflated with atmospheric air;
Fig. 3 shows a perspective view of the internal structure of the airship with balloons or bags inflated with hydrogen;
Fig. 4 shows a perspective view of the internal structure of the airship closed with the rigid hood lining;
Fig. 5 shows a perspective view of completed airship from the bottom;
Fig. 6 shows a perspective view of completed airship from the top;
Fig. 7 shows a perspective view of an airship hovering over an airport;
Fig. 8 shows a side view of a part of the airship docking to the tower;
Fig. 9 shows a perspective view of a airship shaped as a saucer;
Fig. 10 shows a side view of a part of a airship during the construction process;

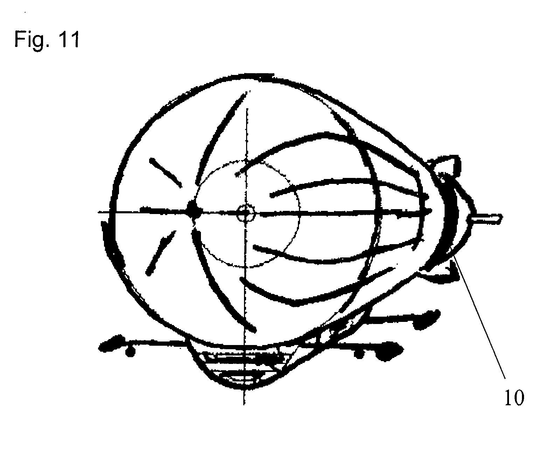

Fig. 11 shows another front perspective view of a airship.

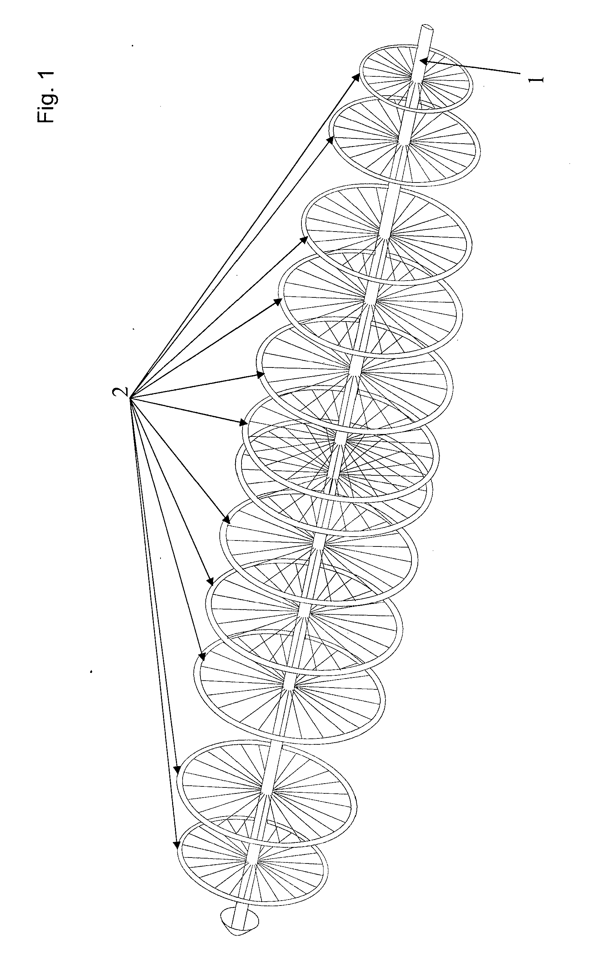

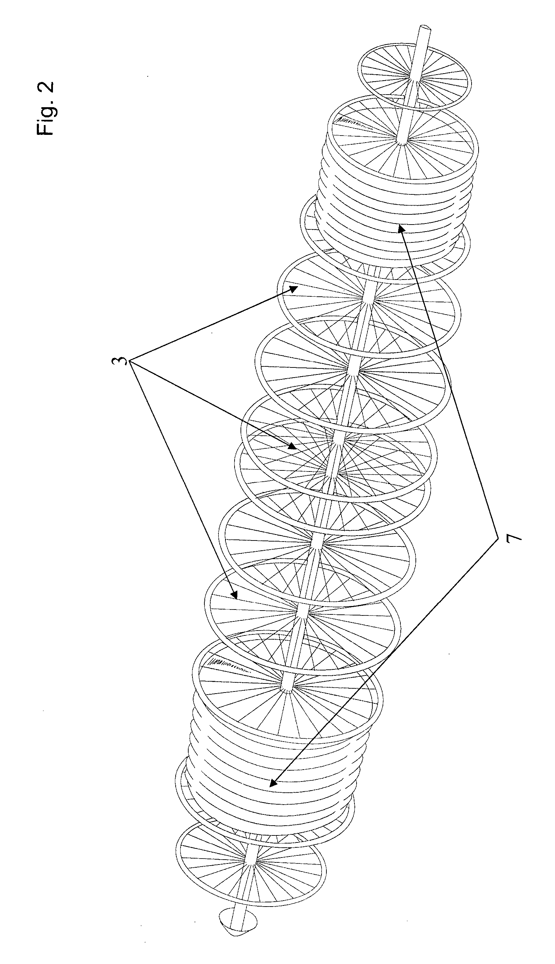

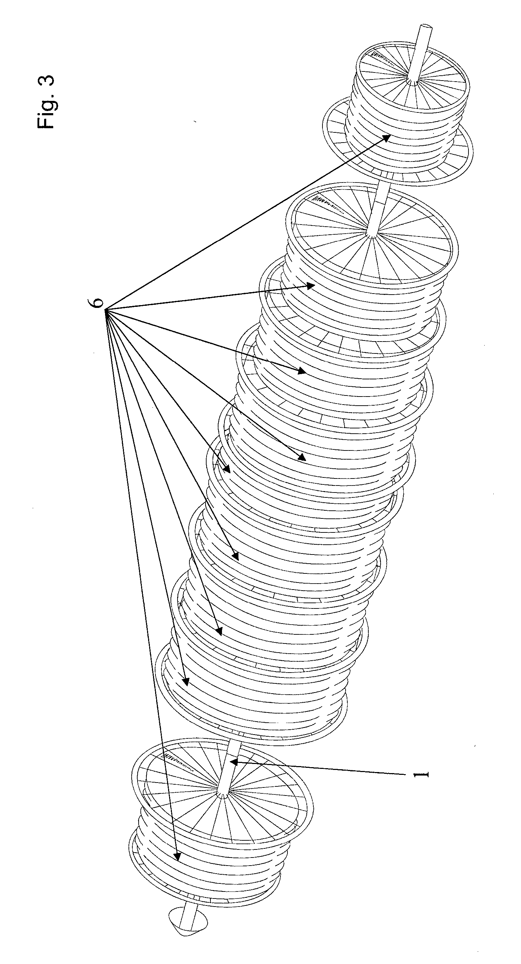

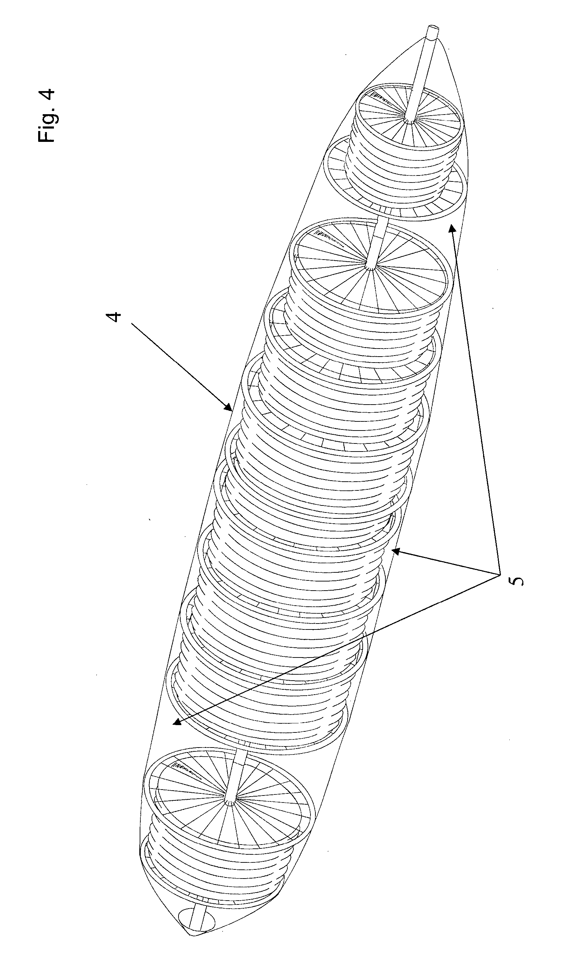

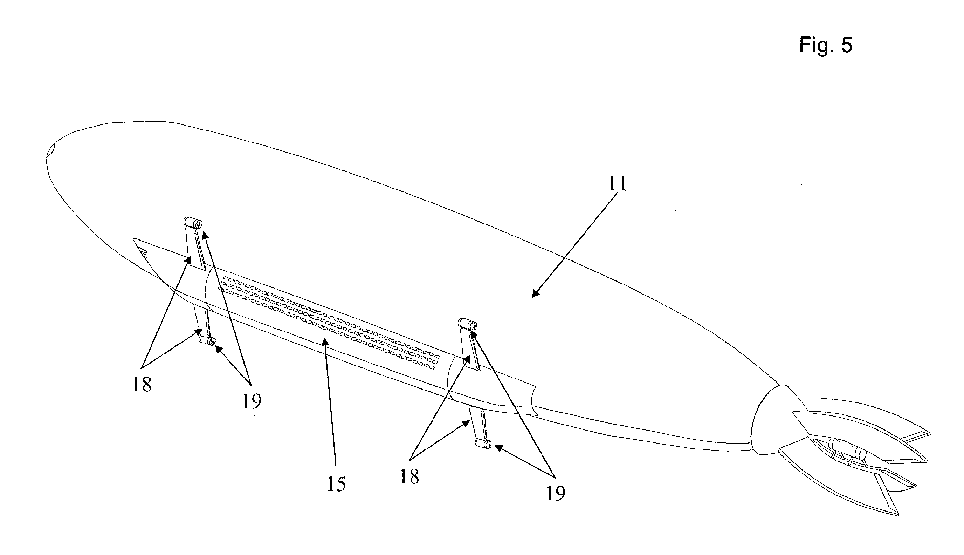

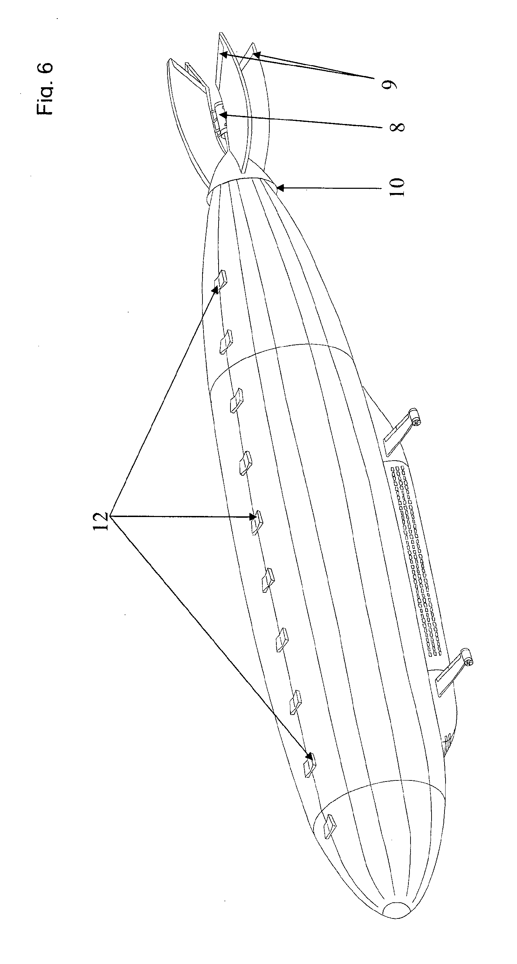

The backbone of the airship shown in Fig. 1-9 comprises a central tube 1 defining structural dimensions and length of the airship, having a diameter of between 5 to 10% of the diameter of the airship, and plurality of structural rings 2 anchored concentrically to the tube 1 by rods or core tubes 3. The tube 1 and the rings 2 are made from aluminium, duralumin, fiber reinforced composites or their combination.

The tube 1 is filled with hydrogen under the pressure of about 0.5 to 2.0 kg/cm² and the rings 2 are filled with hydrogen under the pressure of 2.0 to 3.0 kg/cm². This internal pressure prestresses these elements and ensures their rigidity.

The internal pressure maintains tensile strength fibres that leave the cross pipe burst because they are much more resistant to traction than metal blades. Since the longitudinal fibres have reduced demand, as part of the force is balanced by the reaction force of buoyancy of the turbines placed in the tail of the aircraft and the force exerted by the top front that breaks the layers of air travel in the aircraft.

The airship is covered by an external cover 4 made from hard metallic material, alloy or composition of metallic materials (aluminium/duralumin), forming a sandwich of rolled metal sheets reinforced with fibres (composite). The cover 4 is entirely waterproof and defines the cigar-like shape of the airship. Further the cover is internally filled in spaces 5 with helium or a mixture of helium with Halon under the pressure of about 100 to 1.400 mmcA (millimetres of water). This internal filing of the cover also improve the rigidity of the airship but also absorb the rays and electrical discharges thus preventing electric or magnetic fields that might cause discharges inside the cover.

The tube 1 transfers the forces received by the thrust of the engines to the dome and partially to the front rings 2 supporting the outer cover 4.

Further the airship comprises bubbles or pockets disposed in the internal sections of the airship and interspersed between structural rings 2. The pockets are made of flexible material and are inflated by hydrogen. Further the pockets have outer walls spaced from each other forming nets or screens for connecting cooling and heating means that regulate internal density of the hydrogen inside the pockets. The quantity and dimensions of these pockets depend on the size of the aircraft.

Since the pockets are surrounded by Hel they feature better safety and protection with regard to the use of hydrogen. The temperature variation of hydrogen in the chambers of these pockets are controlled by heat exchangers with baffles and heating sets at the bottom and cooling sets at the top. These heating and cooling sets are corrugated and comprise finned tubes and fans that transfer large amounts of hydrogen having its temperature altered by transposition of a fluid in the heat exchangers at the hot bottom (expanding hydrogen) and at the cold top (contracting it).

The airship also comprises balloons or bags 6 filed with hydrogen disposed in structural sections defined by neighbouring rings 2, wherein two structural sections near each end of the central tube 1 contain cuffs 7 filled with air (which is about ten times heavier than hydrogen).

The quantity and sizes of balloons 6 and cuffs 7 depend on the size of the airship, having construction that facilitates modularity of mounting particular modules.

The cuffs 7, the position of which is distanced, preferably equally, from the centre of gravity of the airship are interconnected by a duct fitted with fans, allowing the transfer of air from bow to stern cuff 7 of the airship, and vice versa.

The cuffs 7 serve as operational ballast ensuring balance of weight and volume and thus stable hover flight, allowing the aircraft to stay completely still and level regardless of the external pressure of the aircraft (which varies with altitude).

The cuffs 7 also ensure the stabilization of the centre of gravity of the airship even if there are differences in temperature among the various hydrogen balloons 6 over his fuselage.

The hydrogen balloons 6 may be heated or cooled, where obviously temperature increase lead to an expansion of gases at the same pressure, or increase pressure at the same volume held constant.

The airship also comprises at least one device (not shown) for measuring and controlling the internal pressure within the body of the airship. Such a device is readily available in the market.

If the hydrogen balloons 6 are cooled contracting the hydrogen they contain and decreasing its pressure air can be compressed into the cuffs 7 leading to even greater gain of the airship weight (more air, more weight). On the contrary after the expulsion of air (ballast) from the cuff 7 and/or with the heating and consequent expansion of hydrogen in balloons 6 the aircraft will become lighter.

A turbine 8 or "Ducted Fan" high thrust is fixed on the back of the central structure within or below the central portion of the ejector thus ensuring the transfer of mechanical load across the airship.

Inducers 10 or thrusters in a form of two cones are attached to each other, by their thin ends, through a tube in a form of a throat in proximity of ducted turbine 8. The turbine boosts the airship and transmits mechanical load to the core but also induces through said throat a large mass of air that gets significant speeds through the entries of the cones. Inducing the high speed of air flow over the cover 4 reduces the boundary layer and improves the airship performance creating a jet with large amount of air at the end provided with horizontal and vertical rudders. This flow of air improves the efficiency of the rudder flaps establishing additional manoeuvrability of the airship even when it has not yet acquired its speed.

Coating 11 such as anti-friction Teflon ® silicates, crystallizing agents and water and/or dust repellent is applied to the outer cover. The coating 11 also smoothes ribs, seams and other elements that might affect the aerodynamic of the airship improving its performance, speed and autonomy.

System of air curtains or air blowers 12 is disposed at the top centreline of the airship. It comprises air jets (slides) sweeping air of from the upper surface of the centreline to the right and left at a speed of about 20 m/s thus quickly eliminating water drops and preventing heavy rains to increase the weight of the airship that might cause problems of support. It also reduces the pressure in the curved section of the aircraft, deploying the thrust, which can be used in lifting operations.

Sections 13 fixed below the cover at the front and back end of the airship provide operational command and control movement of the airship, such as tanks, reservoirs, machinery and other components as needed.

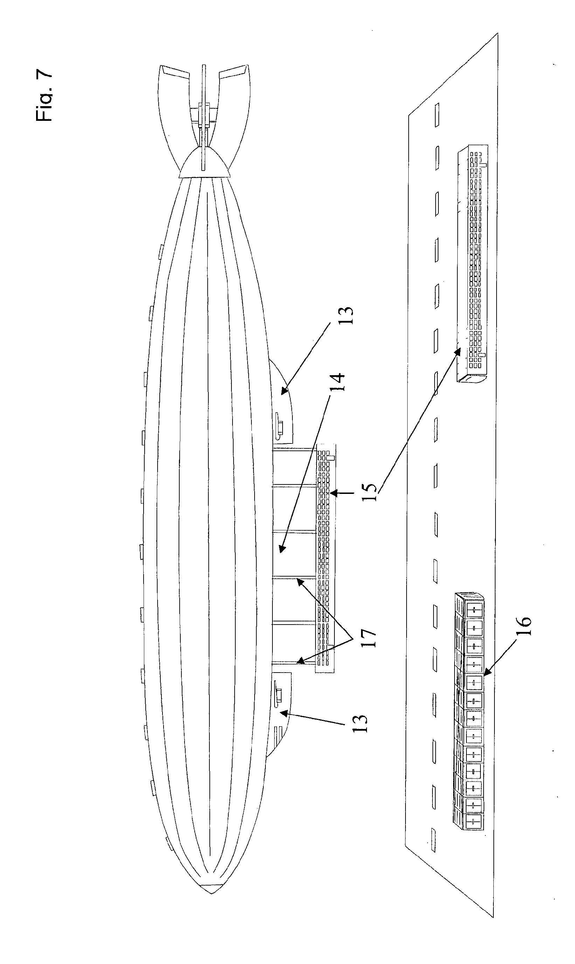

As shown in Fig. 7 central space 14 enables loading containers 16 and/or passenger cabins 15 in the form of a unit that can be hoisted by cables 17 even when the aircraft is located a few hundred feet from the ground, quickly and efficiently.

Sections 13 and other elements for hoisting loading containers 16 and/or passenger cabins 15 are constructed of fairings and elongated profiles L, U, H or similar which are riveted, screwed, glued or otherwise fixed to the airship construction getting stuck to the cover and prestressed to several structural rings 2 and/or core tubes 3. Considering that the fuselage is internally pressurized which keeps the cover pulled in the transverse direction, the weight of trains or cables that carry cargo and/or passengers will extend the cover even more homogeneously.

Aircraft type wings 18 are fixed to the sections 13 and comprise at its ends engine driven thrust propellers or turbo-propellers 19 which can rotate and/or pivot for easier manoeuvring in order to maintain aircraft position even in turbulence and wind gusts. They can also raise or lower the aircraft without the need to vary its weight, which ideal for faster manoeuvres or to correct thermal effects. After reaching the airship cruising speed, propellers 19 may also be used control the lift and vertical direction of the airship.

Wings added to a lighter than air (LTA) aircraft enables for summing up the qualities of floating without a driving force of an airship with the characteristic of stable flight and manoeuvrability of heavier-than-air (HTA) aircraft and the handling characteristics of a helicopter such as hover flight thus producing the most versatile means of transport designed today.

The airship further comprises a number of GPS units having sensors arranged at the bow and at the stern of the airship. They are coupled to a central computer system located preferably in at least one of the fixed sections 13 allowing analyzing and correcting any relative movement of the aircraft, including turns, detours and other changes in situation or route and providing position adjustment and autopilot functionality.

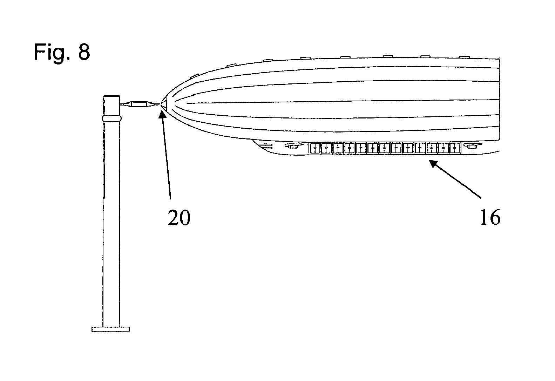

As shown in Fig. 8 the airship further comprises a magnetic anchoring system 20 disposed at its concave front end 20 and fixed to the central tube 1 for parking and/or docking of the airship.

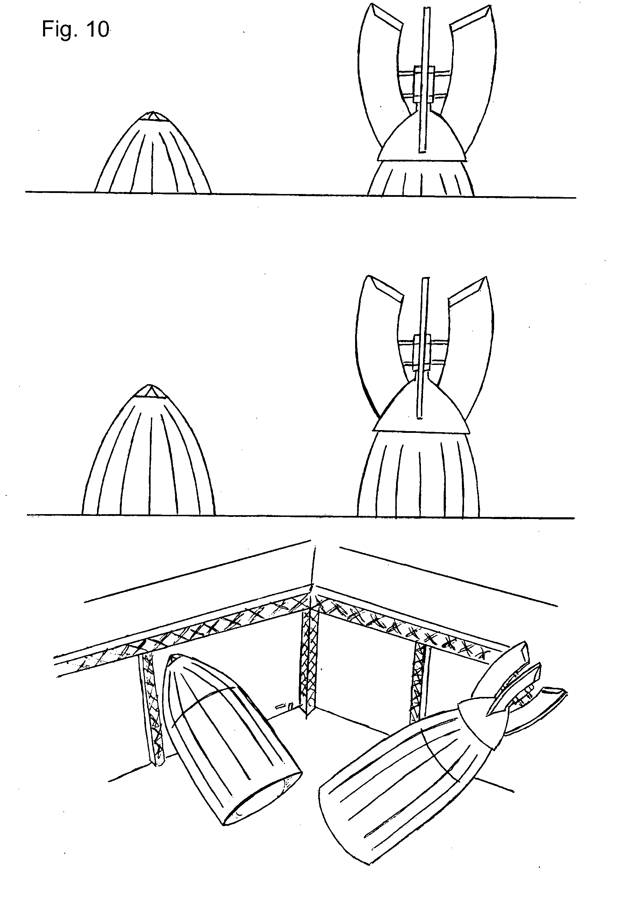

Fig. 10 illustrates an exemplary method of producing the hybrid airship depicted in Fig. 1-9. As shown the construction of the front end or bow of the airship starts form the assembling sections of the central tube and first structural rings appropriate to the front end. Then subsequent balloons and cuffs and further structural rings are modularly assembled vertically along the length of the airship and covered with the parts of the cover, so as to complete the front half of the airship. Likewise the construction of the back end or stern of the airship is proceeded so as to complete its back half. After filing that front and back halves of the airship with light gases, further assembly can now be proceeded horizontally with no need of any support, scaffolding, lifts, etc., since the front and back portions of the airship will simply float in the construction place.

The above embodiments of the present invention are merely exemplary. Figures are not necessarily to scale, and some features may be exaggerated or minimized. These and other factors however should not be considered as limiting the invention, the intended scope of protection of which is indicated in the appended claims.

## Claims

1. A super-rigid hybrid airship having a modular structure and comprising a central tube (1) having a diameter of between 5 to 10% of the diameter of the airship,
structural rings (2) surrounding and preferably concentric with the central tube and connected to the tube by rods,
an external cover (4) made from thin metal sheets, which is pressurized and prestressed by light gases and which is rigid, conductive, non-combustible and impermeable to gases,
balloons (6) disposed in structural sections defined by neighbouring structural rings (2),
at least two cuffs (7) inflated by atmospheric air and ensuring weight, pressure and volume balance of the airship,
wherein the dimensions and quantity of airship components depend on the size of the airship of such a modular design,
**characterized in that**
the thin metal sheets are interspersed with composite resins and fibers,
the balloons (6) are filed with hydrogen, and
the cuffs (7) are interconnected and serving as operational ballast.

2. The hybrid airship according to claim 1, **characterized in that** the external cover (4) is made from aluminium and/or duralumin extremely thin rolled metal sheets stuffed with technical fibres such as carbon fiber, aramid, Kevlar ® and Spectra® disposed longitudinally and transversely with respect to the plane of the sheets and attached to them by epoxy adhesive, forming a "sandwich" structure, wherein the cover (4) have at least two layers, optionally including layers made from lightweight materials featuring good compression resistance such as balsa wood, paper phenol and extruded polystyrene.

3. The hybrid airship according to claim 1, **characterized in that** it further comprises heat exchangers comprising careened baffles for transposition of thermal fluid heated or cooled in order to control of the temperature of the hydrogen contained in balloons (6).

4. The hybrid airship according to claim 1 or 2, **characterized in that** it further comprises a turbine (8) fixed on the back of its structure, along the dome-shaped end of the cover (4) comprising an inductive device (10) such as cones attached together by a slender tube at its ends where the turbine (8) is installed.

5. The hybrid airship according to claim 1 or 2 or 4, **characterized in that** it further comprises additional inducers associated with the turbines, arranged preferably substantially in the axis of the aircraft top coat.

6. The hybrid airship according to claim 1 or 2, **characterized in that** it further comprises anti-friction coating (11) such as Teflon®silicates, crystallizing agents and water and/or dust repellents on the cover (4) of the aircraft.

7. The hybrid airship according to claim 1 or 2, **characterized in that** it further comprises a blower system (12) for dispersing air, arranged preferably substantially on the centreline of the top layer so that the air is blasted from centreline to right and left of the airship.

8. The hybrid airship according to claim 1 or 2, **characterized in that** it further comprises sections (13) fixed below the cover (4) at the front and/or back end and a central space (14) for loading containers (16) and/or passenger cabins (15).

9. The hybrid airship according to claim 8, **characterized in that** it further comprises wings (18) arranged at each side of the fixed sections (13) and optionally comprising at its ends thrust means (19) such as engines and propellers or turbo-propellers.

10. The hybrid airship according to claim 1 or 2, **characterized in that** it further comprises GPS units having sensors arranged at the bow and at the stern for position adjustment and autopilot functionality.

11. The hybrid airship according to claim 1 or 2, **characterized in that** it further comprises an anchoring system, preferably provided with magnetic snap opening (20) disposed at the front end of the airship and preferably fixed to the central tube (1) for parking and/or docking of the airship.

12. A method of producing a hybrid airship defined in any of the claims 1 to 11, **characterized in that** it comprises:
assembling modularly consecutive airship modules defined by sections of a central tube (1) and structural rings (2) substantially vertically along the length of the airship to form the front end part and the back end part of the airship, filing the front end part and the back end part of the airship with light gases to make them float, and
connecting the front end part and the back end part of the airship together.

## Patentansprüche

1. Ultrastarres Hybrid-Luftschiff mit modularer Bauweise, bestehend aus einem Zentralrohr (1) mit Durchmesser 5 bis 10% der Luftschiff-Durchmessers, Konstruktionsringen (2), welche das Zentralrohr umgeben und, bevorzugt, zum Zentralrohr zentriert sind und mittels Stangen mit dem Zentralrohr verbunden sind,
aus einer Außenhaut (4) aus dünnen Blechtafeln, welches unter Druck steht und mit Leichtgases gefüllt, steif, leitend, unbrennbar und für Gase undurchlässig ist,
aus Ballons (6) in den durch die benachbarten Konstruktionsringen liegenden definierten Konstruktionssektionen (2),
aus mindestens zwei Ringen (7) gefüllt mit atmosphärischer Luft zur Gewährleistung der gewichts-, druck- und volumensmäßigen Ballance des Luftschiffs,
wobei die Abmessungen und Anzahl der Komponenten des Luftschiffs von der Größe des Luftschiffs in modularer Bauweise abhängen
**gekennzeichnet dadurch, dass**
die dünnen Blechtafeln mit Harz und Verbundfasern getrennt, die Ballons (6) mit Luft gefüllt und die Ringe (7) miteinander verbunden sind und als Arbeitsballast dienen.

2. Hybrid-Luftschiff nach Anspruch 1, **gekennzeichnet dadurch, dass** das die Außenhaut (4) aus extrem dünnen Walzblechtafeln aus Aluminium und/oder Duraluminium besteht, gefüllt mit technischen Fasern wie Kohlenfaser, Aramid, Kevlar ® und Spectra®, verlegt längs und quer zur Blechtafelebene, verbunden durch Epoxidmasse, als eine "Schichtkonskruktion", in welcher der Deckel (4) aus mindestens zwei Schichten besteht, optional mit Schichten aus Leichtwerkstoffen mit einer hohen Druckfestigkeit, wie Balsa, Papierphenol oder extrudiertes Polystyrol.

3. Hybrid-Luftschiff nach Anspruch 1, **gekennzeichnet dadurch, dass** es über Wärmetauscher aus Schwenktrennwänden zum Transport des Wärmeträgers zur Regelung der Wasserstofftemperatur in Ballons (6) verfügt.

4. Hybrid-Luftschiff nach Anspruch 1 oder 2, **gekennzeichnet dadurch, dass** es darüber hinaus über eine Heckturbine (8) mit kuppelförmigem Deckelabschluss (4) verfügt, bestehend aus einem Induktionsgerät (10) wie beispielsweise miteinander über ein dünnes Rohr an Enden verbundene Kegel, wo die Turbine (8) installiert ist (8).

5. Hybrid-Luftschiff nach Anspruch 1 oder 2 oder 4, **gekennzeichnet dadurch, dass** es darüber hinaus über mit den Turbinen verbundene Induktoren verfügt, welche bevorzugt zum Großteil in der Achse der oberen Außenhaut des Luftschiffes liegen.

6. Hybrid-Luftschiff nach Anspruch 1 oder 2, **gekennzeichnet dadurch, dass** es darüber hinaus über eine Reibschutzbeschichtung (11) verfügt, wie Teflon®, Silikate, Kristallisationsmittel und/oder staubbeständige Mittel auf dem Luftschiffdeckel (4).

7. Hybrid-Luftschiff nach Anspruch 1 oder 2, **gekennzeichnet dadurch, dass** es darüber hinaus über Gebläse (12) zur Luftverteilung verfügt, positioniert bevorzugt in der Mittellinie der oberen Schicht, sodass die Luft von der Mittellinie nach rechts oder links vom Luftschiff weggeblasen wird.

8. Hybrid-Luftschiff nach Anspruch 1 oder 2, **gekennzeichnet dadurch, dass** es darüber hinaus über Sektionen (13) unterhalb des Deckels (4) vorne und/oder hinten sowie einen Zentralraum (14) zur Verladung der Behälter (16) und/oder Fahrgastkabinen (15) verfügt.

9. Hybrid-Luftschiff nach Anspruch 8, **gekennzeichnet dadurch, dass** es darüber hinaus über Flügel (18) auf allen Seiten der Sektionen (13) verfügt, optional mit Zugkraftgeneratoren (19), wie Motoren und Luftschraube oder Turbinenluftschraube.

10. Hybrid-Luftschiff nach Anspruch 1 oder 2, **gekennzeichnet dadurch, dass** es darüber hinaus über GPS-Module mit Sensoren am Bug und Heck zur Positionsregelung und mit Autopilotfunktion verfügt.

11. Hybrid-Luftschiff nach Anspruch 1 oder 2, **gekennzeichnet dadurch, dass** es darüber hinaus über Ankersystem, bevorzugt mit magnetischer Schnappverschluss (20) vorne und, bevorzugt, Befestigung am Zentralrohr (1) zum Parken und/oder Docken des Luftschifft verfügt.

12. Verfahren für Herstellung des Hybrid-Luftschiffs nach einem der Ansprüche 1 bis 11, **gekennzeichnet dadurch, dass** es folgende Schritte umfasst:
Montage der einzelnen Module des Luftschiffs, die durch die Sektionen des Zentralrohres (1) und die Konstruktionsringe (2) definiert sind und vertikal in Längsrichtung des Luftschiffs liegen und den vorderen sowie hinteren Teil des Luftschiffs bilden, Füllung der vorderen und hinteren Teils des Luftschiffs mit Leichtgasen sodass sie in der Luft schweben können, sowie
Verbindung des vorderen und des hinteren Teils des Luftschiffs miteinander.

## Revendications

1. Un dirigeable hybride super-rigide de construction modulaire, comprenant un tube central (1) du diamètre s'élevant à 5 à 10% du diamètre du dirigeable, des anneaux structurels (2) entourant et, de préférence, placés de façon concentrique en relation au tube central et connectés avec le tube à l'aide de tiges,
une enveloppe extérieure (4) faite en feuilles de tôle fines, soumises à la pression et comprimée à l'aide des gaz légers, et qui est rigide, conductrice, ininflammable et étanche au gaz,
des ballons (6) installés en sections de construction définies par les anneaux de construction voisins (2),
au moins deux anneaux (7), pompés par l'air atmosphérique et garantissant un équilibre de poids, de pression et de volume du dirigeable,
dont les dimensions et la quantité des éléments du dirigeable dépendent de la grandeur du dirigeable ayant une telle construction modulaire
**caractérisé en ce que**
les feuilles de tôle fines sont séparées par les époxydes et les fibres composites, les ballons (6) sont remplis par l'hydrogène, et les anneaux (7) sont mutuellement joints et servent de lest de travail.

2. Le dirigeable hybride selon la revendication 1, **caractérisé en ce que** l'enveloppe extérieure (4) est faite en feuilles de tôle en aluminium et/ou en duralumin, extrêmement fines, laminées, remplises par les fibres techniques tels que le fibre de carbone, l'aramide, le Kevlar ® et le Spectra ®, mis en parallèle et en travers en fonction au plan des feuilles de la tôle, et fixés avec eux par le liant en époxyde, créant ainsi une structure en sandwich, dans lequel l'enveloppe (4) a deux couches au moins, en option avec des couches faites en matériaux légers de haute résistance au serrement tels que le balsa, le papier phénolique et le polystyrène extrudé.

3. Le dirigeable hybride selon la revendication 1, caractérisé en ce qu'il contient en plus les échangeurs thermiques faits en parois de carène afin de faire passer le fluide thermique chauffé ou refroidi pour régler la température de l'hydrogène se trouvant dans les ballons (6).

4. Le dirigeable hybride selon la revendication 1 ou 2, caractérisé en ce qu'il contient en plus une turbine (8) installée sur sa partie arrière, avec l'extrémité de l'enveloppe (4) sous forme d'une coupole, se composant d'un éjecto-convecteur (10) tel que des cônes interconnectés à l'aide d'un tube fin à ses extrémités où la turbine (8) a été installée.

5. Le dirigeable hybride selon la revendication 1 ou 2 ou 4, caractérisé en ce qu'il contient en plus des inducteurs supplémentaires connectés avec les turbines, mis, de préférence, sensiblement dans l'axe du revêtement supérieur du dirigeable.

6. Le dirigeable hybride selon la revendication 1 ou 2, caractérisé en ce qu'il contient en plus une couche de glissement résistante à l'abrasion (11), telle que le Téflon ®, les silicates, les agents de cristallisation et/ou les moyens résistant à la poussière sur l'enveloppe (4) du dirigeable.

7. Le dirigeable hybride selon la revendication 1 ou 2, caractérisé en ce qu'il contient en plus un système souffleur (12) pour distribuer l'air, installé, de préférence, sensiblement en ligne centrale de la couche supérieure de façon à ce que l'air soufflé sorte de la ligne centrale à droite ou à gauche du dirigeable.

8. Le dirigeable hybride selon la revendication 1 ou 2, caractérisé en ce qu'il contient en plus des sections (13) installées sous l'enveloppe (4) devant et/ou derrière, et la partie centrale (14) servant à charger des conteneurs (16) et/ou les cabines des passagers (15).

9. Le dirigeable hybride selon la revendication 8, caractérisé en ce qu'il contient en plus des ailes (18) se trouvant de chaque côté des sections (13) installées et, en option, disposant sur leurs extrémités des appareils créant la poussée (19), tels que les moteurs, les hélices ou les turbo-hélices.

10. Le dirigeable hybride selon la revendication 1 ou 2, caractérisé en ce qu'il contient en plus des modules GPS avec les senseurs se trouvant à l'avant et à l'arrière, servant à régler la position et disposant de la fonction d'autopilote.

11. Le dirigeable hybride selon la revendication 1 ou 2, caractérisé en ce qu'il contient en plus un système d'ancrage, de préférence équipé en fermeture magnétique à loquet (20) se trouvant dans la partie devant du dirigeable et de préférence attachée au tube central (1) pour garer et/ou amarrer le dirigeable.

12. Un procédé de production du dirigeable hybride, défini dans l'une des revendications de 1 à 11, caractérisée en ce qu'il consiste à :
assembler les modules du dirigeable modulaires consécutifs, définis par les sections du tube central (1) et par les anneaux de construction (2), se trouvant sensiblement en vertical le long du dirigeable, en formant la partie devant et la partie derrière du dirigeable,
à remplir la partie devant et derrière du dirigeable par les gaz légers de façon à ce qu'elles restent en l'air, et
à connecter la partie devant et derrière du dirigeable ensemble.
